# EUROPEAN PATENT APPLICATION

(11) **EP 4 635 624 A1**
(43) Date of publication of application: **22.10.2025**
(21) Application number: 23903098.4
(22) Date of filing: 17.10.2023
(51) Int. Cl.: B01J 37/02, B05C 7/04

(54) **TOOL FOR CATALYST APPLICATOR, AND CATALYST APPLICATOR**

(30) Priority: 13.12.2022 JP 2022198669
(71) Applicant: CATALER CORPORATION, Kakegawa-shi, Shizuoka 437-1492 (JP)
(72) Inventor: OHARA, Etsuko, Kakegawa-shi, Shizuoka 437-1492 (JP); MORITA, Ryoma, Kakegawa-shi, Shizuoka 437-1492 (JP); KUWAHARA, Takashi, Kakegawa-shi, Shizuoka 437-1492 (JP)
(74) Representative: Gramm, Lins & Partner Patent- und Rechtsanwälte PartGmbB
(86) International application number: PCT/JP2023/037554
(87) International publication number: WO 2024/127799

(57) **Abstract**

A tool for a catalyst coating apparatus to a honeycomb substrate of an exhaust gas-purifying catalyst is inserted into an outer cylinder having an axial length longer than an axial length of the honeycomb substrate supported by the outer cylinder in a state where an axial direction of the honeycomb substrate is arranged in a vertical direction. The tool comprises a cylindrical partition member having flexibility. An outer peripheral surface of the partition member faces an inner peripheral surface of an outer cylinder extension portion of the outer cylinder protruding upward with respect to an upper end surface of the honeycomb substrate. When the catalyst slurry is supplied to the upper end surface of the honeycomb substrate and an inside of an inner peripheral surface of the partition member, a lower end of the partition member is disposed in a vicinity of an upper end surface of the honeycomb substrate.

## Description

### FIELD

The present invention relates to a tool for a catalyst coating apparatus and the catalyst coating apparatus.

### BACKGROUND

An exhaust gas-purifying catalyst device includes a honeycomb substrate coated with a catalyst and an outer hollow cylinder for maintaining a shape of the honeycomb substrate.

For example, in order to form a catalyst layer on a partition wall of the honeycomb substrate, a catalyst slurry containing a catalytic metal or the like may be coated onto the partition wall of the honeycomb substrate. For example, Jpn. Pat. Appln. KOKAI Publication No. S63-051949 discloses an example of a manufacturing apparatus and a coating method for coating a honeycomb substrate with a catalyst slurry.

When the catalyst slurry is prevented from adhering to an inner peripheral surface of an outer cylinder extension portion of the outer cylinder protruding with respect to an end surface of the honeycomb substrate of the exhaust gas-purifying catalyst device at the time of manufacturing the exhaust gas-purifying catalyst device, the subsequent operation related to manufacturing of the exhaust gas-purifying catalyst device is easily performed.

### SUMMARY

An object of the present invention is to provide a tool for a catalyst coating apparatus, and the catalyst coating apparatus capable of making it difficult to form a coating layer of a catalyst slurry on an inner peripheral surface of an outer cylinder extension portion.

According to an aspect of the present invention, there is provided a tool for a catalyst coating apparatus to a metal honeycomb substrate of an exhaust gas-purifying catalyst device. The catalyst coating apparatus is configured to coat the honeycomb substrate with a catalyst slurry containing a catalytic metal. The tool is inserted into a metal outer cylinder having an axial length longer than an axial length of the honeycomb substrate which is supported by the outer cylinder in a state where an axial direction of the honeycomb substrate is arranged in a vertical direction. The tool comprises a hollow cylindrical partition member having flexibility. An outer peripheral surface of the partition member faces an inner peripheral surface of an outer cylinder extension portion of the outer cylinder protruding upward with respect to an upper end surface of the honeycomb substrate. When the catalyst slurry is supplied to the upper end surface of the honeycomb substrate and an inside of an inner peripheral surface of the partition member, a lower end of the partition member is disposed in a vicinity of an upper end surface of the honeycomb substrate to prevent the catalyst slurry from contacting the inner peripheral surface of the outer cylinder extension portion.

According to the present invention, it is possible to provide a tool for a catalyst coating apparatus, and the catalyst coating apparatus capable of making it difficult to form a coating layer of a catalyst slurry on an inner peripheral surface of an outer cylinder extension portion.

### BRIEF DESCRIPTION OF DRAWINGS

FIG. 1 is a schematic cross-sectional view illustrating a catalyst coating apparatus according to a first embodiment.
FIG. 2 is an enlarged view of a position indicated by reference sign II in FIG. 1.
FIG. 3 is an enlarged view of a position indicated by reference sign III in FIG. 1.
FIG. 4 is a schematic cross-sectional view illustrating a state in which a suction device of the catalyst coating apparatus illustrated in FIG. 1 is operated.
FIG. 5 is an enlarged view of a position indicated by a reference sign V in FIG. 4.
FIG. 6 is a schematic block diagram of a catalyst coating apparatus according to the first embodiment and a second embodiment.
FIG. 7 is a schematic cross-sectional view illustrating a catalyst coating apparatus according to the second embodiment.
FIG. 8 is an enlarged view of a position denoted by reference numeral VIII in FIG. 7.
FIG. 9 is a schematic cross-sectional view illustrating a state in which a suction device of the catalyst coating apparatus illustrated in FIG. 7 is operated.
FIG. 10 is an enlarged view of a position indicated by a reference sign X in FIG. 9.

### DESCRIPTION OF EMBODIMENTS

Hereinafter, each embodiment of the present invention will be described with reference to the drawings. In the embodiment described below, any one of the above aspects is further embodied. The matters described below can be incorporated into each of the above aspects alone or in combination of two or more thereof. Further, the following embodiments illustrate configurations for embodying the technical idea of the present invention, and the technical idea of the present invention is not limited by the following materials, shapes, structures, and the like. Various modifications can be made to the technical idea of the present invention within the technical scope defined by the claims described in the claims.

Elements having same or similar functions are denoted by the same reference numerals in the drawings referred to below, and redundant description will be omitted. In addition, the drawings are schematic, and a relationship between a dimension in a certain direction and a dimension in another direction, a relationship between a dimension of a certain member and a dimension of another member, and the like may be different from actual ones.

### (First Embodiment)

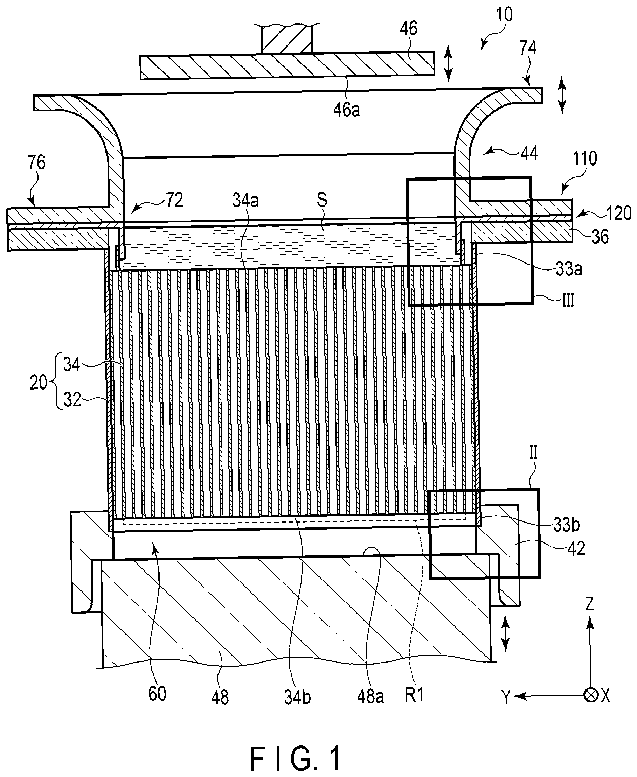

A catalyst coating apparatus 10 according to a first embodiment will be described with reference to FIGS. 1 to 6.

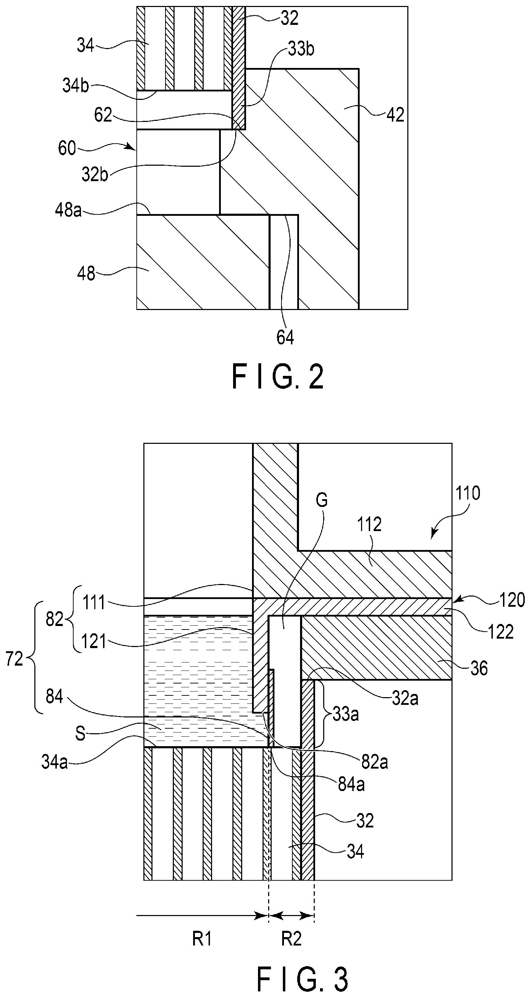

FIG. 1 is a schematic cross-sectional view illustrating a state in which an exhaust gas-purifying catalyst (exhaust gas-purifying device) 20 as a substantially columnar catalyst filter is disposed in the catalyst coating apparatus 10. FIG. 2 is an enlarged view of a position indicated by reference sign II in FIG. 1. FIG. 3 is an enlarged view of a position indicated by reference sign III in FIG. 1.

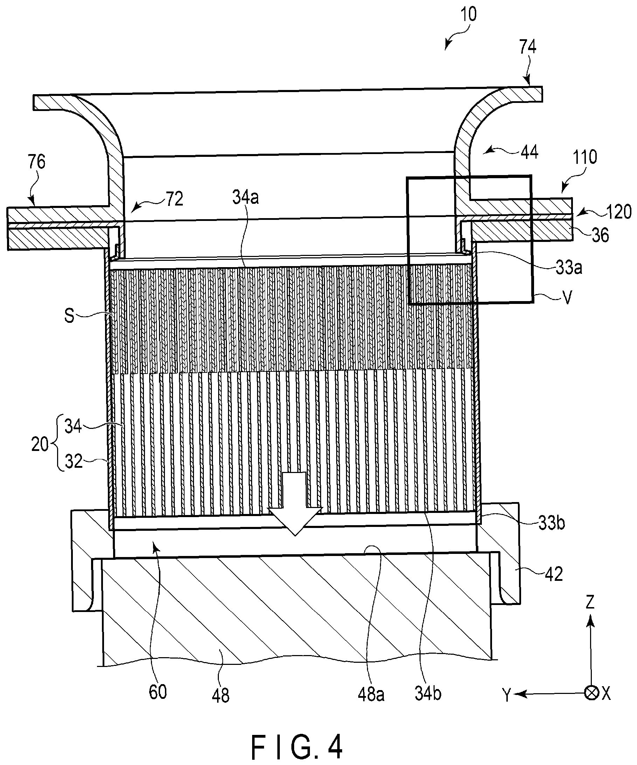

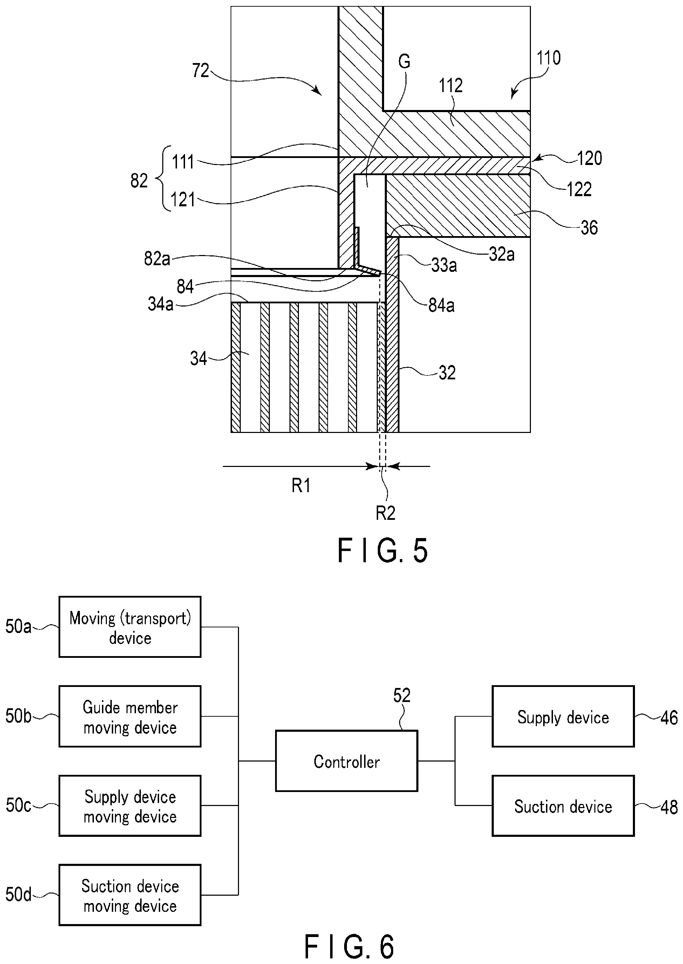

FIG. 4 is a schematic cross-sectional view illustrating a state in which a catalyst slurry S is coated on a honeycomb substrate 34 of the exhaust gas-purifying catalyst 20 disposed in the catalyst coating apparatus 10. FIG. 5 is an enlarged view of a position indicated by a reference sign V in FIG. 4.

Note that, as illustrated in FIGS. 1 and 4, an XYZ orthogonal coordinate system is set. An X-axis direction coincides with a transporting direction of a base 42 described later and an exhaust gas-purifying catalyst 20 transported in a state of being placed on the base 42. A Z-axis direction coincides with a vertical direction. A Y-axis direction coincides with a direction orthogonal to the X-axis direction and the Z-axis direction.

FIG. 6 is a schematic block diagram of the catalyst coating apparatus 10.

As illustrated in FIGS. 1 to 5, the exhaust gas-purifying catalyst 20 includes an outer cylinder 32 and a honeycomb substrate 34.

The outer cylinder 32 has, for example, a hollow cylindrical shape. The outer cylinder 32 may have other cylinder shapes such as a polygonal cylinder shape, an elliptical cylinder shape, and an elongated cylinder shape. The outer cylinder 32 is formed by metal such as stainless steel material, for example.

An axial length of the outer cylinder 32 is formed to be longer than an axial length of the honeycomb substrate 34. The honeycomb substrate 34 is accommodated in a hollow portion of the outer cylinder 32. That is, the honeycomb substrate 34 is inserted into the outer cylinder 32. The honeycomb substrate 34 is formed so as to maintain the shape of the hollow portion of the outer cylinder 32. In the present embodiment, the honeycomb substrate 34 is formed in a columnar shape.

The honeycomb substrate 34 is accommodated in the hollow portion between one end portion 32a and another end portion 32b of the outer cylinder 32. Thus, one end surface (upper end surface when disposed in the catalyst coating apparatus 10) 34a of the honeycomb substrate 34 is separated from an opening of the one end portion 32a of the outer cylinder 32 toward the other end portion 32b, and another end surface (lower end surface when disposed in the catalyst coating apparatus 10) 34b of the honeycomb substrate 34 is separated from an opening of the other end portion 32b of the outer cylinder 32 toward the one end portion 32a. That is, the outer cylinder 32 includes a first outer cylinder extension portion 33a protruding from the one end surface (upper end surface) 34a of the honeycomb substrate 34 on one end side. The outer cylinder 32 includes a second outer cylinder extension portion 33b protruding from the other end surface (lower end surface) 34b of the honeycomb substrate 34 on the other end side. In the present embodiment, an example in which the first outer cylinder extension portion 33a and the second outer cylinder extension portion 33b are provided will be described, but either one of the first outer cylinder extension portion 33a and the second outer cylinder extension portion 33b may be provided. For example, the other end portion 32b of the outer cylinder 32 and the other end surface 34b of the honeycomb substrate 34 may be flush with each other.

In the present embodiment, an example in which both the first outer cylinder extension portion 33a and the second outer cylinder extension portion 33b are provided will be described.

Note that an annular body 36 is preferably detachably fixed to the one end portion 32a of the outer cylinder 32. A surface of the annular body 36 on a side opposite to the one end portion 32a side of the outer cylinder 32 is preferably formed as a flat surface that comes into contact with a lower surface of a flange portion 76 described later of a guide member 44 or on which the flange portion 76 is placed when an axial direction of the outer cylinder 32 is arranged in the vertical direction. Note that it is preferable that the annular body 36 is attached to the outer cylinder 32 before the catalyst slurry S described later is coated on the honeycomb substrate 34 by the catalyst coating apparatus 10, and is removed from the outer cylinder 32 after the catalyst slurry S is coated on the honeycomb substrate 34.

It is also preferable that the annular body 36 is formed as an annular buffer member that can buffer against contact with the flange portion 76 of the guide member 44 described later.

The honeycomb substrate 34 is formed by, for example, a metal material such as a stainless steel material. As an example, the honeycomb substrate 34 may have, for example, a substantially columnar structure in which a flat plate (metal foil) and a corrugated plate (metal foil) are wound in a superposed state. The shape of the honeycomb substrate 34 is maintained by being accommodated in the hollow portion of the outer cylinder 32. The honeycomb substrate 34 has an outer shape substantially equal to the hollow portion in the outer cylinder 32. Such a honeycomb substrate 34 may have a gap between the flat plate and the corrugated plate as a through hole. Penetration directions of the large number of through holes of the honeycomb substrate 34 are preferably arranged in parallel. The penetration directions of the large number of through holes of the honeycomb substrate 34 are preferably in parallel to an axial direction of a central axis of the outer cylinder 32. Note that a wall surface defining each through hole of the honeycomb substrate 34 may be referred to as a cell (partition wall).

A catalyst for decomposing and purifying harmful components such as carbon monoxide (CO), hydrocarbon (HC), and nitrogen oxide (NOx) contained in the exhaust gas is coated (carried) on the honeycomb substrate 34 of the exhaust gas-purifying catalyst 20.

Note that, here, the "exhaust gas-purifying catalyst 20" and the "catalyst" are used in a distinguished manner. The "exhaust gas-purifying catalyst 20" refers to a catalyst filter. In addition, when simply referred to as a "catalyst", it refers to a catalyst or the like coated on the honeycomb substrate 34, not the entire "exhaust gas-purifying catalyst 20" illustrated in FIG. 1.

In the present embodiment, the catalyst coating apparatus 10 for coating the honeycomb substrate 34 of the exhaust gas-purifying catalyst 20 with a catalyst will be described.

As the coating liquid containing the catalyst, a catalyst slurry S that spreads on the upper end surface of the honeycomb substrate 34 due to its own viscosity, surface tension, and the like when an appropriate amount is supplied to the upper end surface of the honeycomb substrate 34, and is uniformly coated on the honeycomb substrate 34 when sucked can be used. In this state, a part of the catalyst slurry S flows from the upper end surface 34a toward the lower end surface 34b of the honeycomb substrate 34. That is, the catalyst slurry S flows on the partition wall forming the through hole penetrating the upper end surface 34a and the lower end surface 34b of the honeycomb substrate 34. The axial direction of the through hole is preferably parallel to the axial direction (central axis) of the outer cylinder 32. Further, a part of the catalyst slurry S flows on the upper end surface 34a of the honeycomb substrate 34 toward an inner peripheral surface of the first outer cylinder extension portion 33a of the outer cylinder 32. Thus, when the catalyst slurry S is supplied to the upper end surface 34a of the honeycomb substrate 34, the catalyst slurry S spreads on the upper end surface 34a of the honeycomb substrate 34.

The catalytic metal is, for example, a platinum group metal such as platinum, palladium, or a rhodium compound; other transition metals such as iron and copper; alkali metals such as lithium and potassium; alkaline earth metal such as barium; or two or more thereof.

The heat resistant carrier is, for example, a refractory inorganic oxide such as alumina. The co-catalyst is, for example, an oxygen storage material such as ceria and ceria-zirconia composite oxide; nitrogen oxide (NOx) occlusion material containing alkali metal; hydrocarbon adsorbents such as zeolites; or two or more thereof.

The dispersion medium is, for example, water. The dispersion medium may be an organic solvent or a mixture of an organic solvent and water.

The coating liquid can further contain additives, for example, a thickener such as cellulose, a dispersion stabilizer, and a binder. When the coating liquid contains a thickener such as cellulose, the concentration thereof is preferably in a range of 0.3 to 3% by mass.

In the present embodiment, it is described that the catalyst is coated on the honeycomb substrate 34 using the catalyst coating apparatus 10 in a state where the first outer cylinder extension portion 33a of the exhaust gas-purifying catalyst 20 is disposed on the upper side, the second outer cylinder extension portion 33b is disposed on the lower side, and the annular body 36 is attached to the first outer cylinder extension portion 33a, and the exhaust gas-purifying catalyst 20 is manufactured.

Note that the maximum diameter of the outer cylinder 32 is, for example, in a range of 33 mm to 175 mm. The axial dimension of the outer cylinder 32, that is, a length of the outer cylinder 32 is, for example, in the range of 50 mm to 210 mm. A dimension of the honeycomb substrate 34 in the axial direction of the outer cylinder 32 is, for example, in the range of 40 mm to 185 mm. The distance from the honeycomb substrate 34 to each opening of the outer cylinder 32 is, for example, in the range of 5 mm to 45 mm.

Note that the honeycomb substrate 34 is not limited to the one described above, and it is sufficient that one end of a large number of through holes penetrating the honeycomb substrate 34 is on the first outer cylinder extension portion 33a side and the other end is on the second outer cylinder extension portion 33b side.

Hereinafter, the catalyst coating apparatus 10 will be described.

The catalyst coating apparatus 10 is an apparatus that coats the honeycomb substrate 34 of the exhaust gas-purifying catalyst 20 illustrated in FIGS. 1 and 4 with a coating liquid.

As illustrated in FIGS. 1 to 5, the catalyst coating apparatus 10 includes a base 42, a guide member (a tool for the catalyst coating apparatus 10) 44, a catalyst slurry supply device 46, and a suction device 48. As illustrated in FIG. 6, the catalyst coating apparatus 10 includes moving devices 50a to 50d, and a controller 52 that controls the moving device 50a to 50d, the supply device 46, and the suction device 48. Note that illustration of the moving devices 50a to 50d is omitted in FIGS. 1 and 4.

Although not illustrated in FIGS. 1 and 4, the moving device 50a transports the base 42 in the X-axis direction, disposes an opening 60, which will be described later, of the base 42 at a predetermined position or in the vicinity thereof, and positions the central axis of the opening 60 along the Z-axis direction. The moving device 50b moves the guide member 44 in the Z-axis direction with respect to the first outer cylinder extension portion 33a of the exhaust gas-purifying catalyst 20 supported by a first fitting portion 62 of the opening 60 of the base 42. The moving device 50c moves the supply device 46 in the Z-axis direction. The moving device 50d moves the suction device 48 in the Z-axis direction with respect to the base 42 so that a suction port 48a of the suction device 48 described later is fitted to the second fitting portion 64 of the opening 60 of the base 42. Note that it is preferable that the moving device 50d does not change the position of the base 42 in the vertical direction in a state where the suction port 48a of the suction device 48 is fitted to the second fitting portion 64 of the opening 60 of the base 42.

The controller 52 is, for example, an integrated circuit such as a central processing unit (CPU) or an application specific integrated circuit (ASIC). A general-purpose computer may be used as the controller 52. The controller 52 is not limited to being provided as a dedicated circuit, and may have a program executed by a computer. In this case, the program is recorded in a storage area, a memory, or the like in the integrated circuit. The controller 52 is connected to the supply device 46, the suction device 48, and the moving devices 50a to 50d. The controller 52 appropriately moves the supply device 46, the suction device 48, and the moving devices 50a to 50d, and executes the coating treatment of the catalyst slurry S on the honeycomb substrate 34 of the exhaust gas-purifying catalyst 20 by the catalyst coating apparatus 10.

The controller 52 causes the supply device 46 to discharge, for example, a predetermined amount of catalyst slurry S per unit time from a nozzle portion 46a described later. The controller 52 generates a suction action at a predetermined suction pressure, for example, for a predetermined time through a suction port 48a described later of the suction device 48.

The base 42 illustrated in FIGS. 1, 2, and 4 is formed as a plate or a block that supports the exhaust gas-purifying catalyst 20 at a predetermined position in a predetermined direction. The base 42 is preferably formed by a metal material having rigidity that suppresses elastic deformation due to support of the exhaust gas-purifying catalyst 20, suction by the suction device 48, and the like.

The base 42 has an opening (through hole) 60 penetrating vertically along the Z-axis direction. An annular first fitting portion 62 is provided around the upper side of the opening 60 of the base 42. An annular second fitting portion 64 is formed around the lower side of the opening 60 of the base 42.

The first fitting portion 62 supports the other end portion (lower end portion) 32b of the second outer cylinder extension portion 33b of the outer cylinder 32 of the exhaust gas-purifying catalyst 20 and an outer peripheral surface thereof, and positions the axial direction of the outer cylinder 32 in the vertical direction (Z-axis direction).

The second fitting portion 64 supports the suction port 48a described later of the suction device 48, and positions the suction port 48a of the suction device 48 so that the suction direction of the suction device 48 coincides with the axial direction (vertical direction) of the outer cylinder 32.

The base 42 is preferably formed so as to be transported in a predetermined direction such as the X-axis direction by the moving device 50a. The base 42 is disposed at a predetermined position by, for example, a moving device (transport device) 50a that is moved so that the guide member 44 is attached in a predetermined state to the first outer cylinder extension portion 33a of the exhaust gas-purifying catalyst 20, the catalyst slurry S is appropriately supplied from the supply device 46 to the guide member 44, and the suction device 48 is attached in a predetermined state to the second fitting portion 64. The base 42 is arranged in a positional relationship in which the suction device 48, the guide member 44, and the supply device 46 move up and down along the Z-axis direction along the central axis of the opening 60 of the base 42.

Note that it is also preferable that the base 42 is fixed in advance instead of being transported by the moving device 50a. In this case, when the catalyst slurry S is coated on the honeycomb substrate 34, the lower end portion 32b of the outer cylinder 32 of the exhaust gas-purifying catalyst 20 is supported on the first fitting portion 62.

The guide member 44 includes a partition member (cylindrical portion) 72, an enlarged diameter portion (guide) 74, and a flange portion 76.

The partition member 72 is located at the lowermost portion of the guide member 44. In the present embodiment, the partition member 72 is formed in a hollow cylindrical shape. The axial direction of the partition member 72 coincides with the vertical direction.

In the present embodiment, the partition member 72 includes a cylindrical body 82 and a curtain-shaped elastic member (flexible partition member) 84. The cylindrical body 82 and the elastic member 84 are each formed in a hollow cylindrical shape, for example, a substantially cylindrical shape.

The cylindrical body 82 is formed in a cylindrical shape having appropriate rigidity so as to maintain the shape of the cylindrical body 82 when the catalyst slurry S is disposed inside or the catalyst slurry S is sucked.

It is preferable that an inner diameter of the cylindrical body 82 is constant from an upper end to a lower end, but the inner diameter of the cylindrical body 82 may be smaller toward the lower side.

An outer peripheral surface of the cylindrical body 82 is formed to have an annular gap G with the inner peripheral surface of the first outer cylinder extension portion 33a. It is preferable that the distance of the gap G between the outer peripheral surface of the cylindrical body 82 and the inner peripheral surface of the first outer cylinder extension portion 33a is, for example, about 4 mm.

The cylindrical body 82 is not necessarily required as long as the partition member 72 includes the elastic member 84.

The elastic member 84 is fixed to, for example, the outer peripheral surface of the cylindrical body 82, and is formed in a cylindrical shape extending downward from the lower end of the cylindrical body 82. The elastic member 84 is used to prevent the catalyst slurry S from adhering to the inner peripheral surface of the first outer cylinder extension portion 33a and to protect the inner peripheral surface from the catalyst slurry S.

The elastic member 84 is formed in a cylindrical shape having appropriate rigidity so that the shape of the elastic member 84 is maintained when the catalyst slurry S is disposed inside, and the cylindrical elastic member 84 spreads outward in a flared shape and is elastically deformed so as to approach the inner peripheral surface of the first outer cylinder extension portion 33a when the catalyst slurry S is sucked. Thus, the elastic member 84 is formed by a material softer than the cylindrical body 82 and is appropriately formed thin.

As the elastic member 84, a material having good chemical resistance, flexibility, and appropriate repulsive elasticity is used. As the elastic member 84, for example, silicone rubber, chloroprene rubber, natural rubber, or the like is preferably used. Note that a thickness of the elastic member 84 and a length along the Z-axis direction are adjusted by various factors such as the viscosity of the catalyst slurry S to be used, the repulsive elasticity of the elastic member 84, the distance between the inner peripheral surface of the first outer cylinder extension portion 33a and the elastic member 84, the method of fixing the elastic member 84 to the cylindrical body 82, and the distance between the cylindrical body 82 and the upper end surface 34a of the honeycomb substrate 34.

The hardness (elastic deformability) of the elastic member 84 may be adjusted between the upper end and the lower end by adjusting a material, adjusting a thickness, or the like. The hardness (deformability) of the elastic member 84 is set so as to suppress movement of the catalyst slurry S to the outside of the elastic member 84 when the catalyst slurry S is not sucked. Further, the hardness (deformability) of the elastic member 84 is set so that a lower end 84a of the elastic member 84 is elastically deformed in a flare shape so as to approach the inner peripheral surface of the first outer cylinder extension portion 33a when being sucked.

The distance between a lower end 82a of the cylindrical body 82 and the lower end 84a of the elastic member 84 is, for example, preferably about 4 mm. Note that, when the elastic member 84 is bent from the state illustrated in FIGS. 1 and 3 toward the state illustrated in FIGS. 4 and 5, the lower end 84a of the elastic member 84 is preferably formed at a distance that does not touch the inner peripheral surface of the first outer cylinder extension portion 33a. When the lower end 84a of the elastic member 84 comes closest to the inner peripheral surface of the first outer cylinder extension portion 33a, the distance between the lower end 84a of the elastic member (curtain) 84 and the inner peripheral surface of the first outer cylinder extension portion 33a is preferably about 0 mm to 2 mm.

As illustrated in FIG. 2, the lower end (distal end) 84a of the elastic member (curtain) 84 is preferably disposed at a position not in contact with the upper end surface 34a of the honeycomb substrate 34. A distance between the lower end 84a of the elastic member (curtain) 84 and the upper end surface 34a of the honeycomb substrate 34 is preferably about 0 mm to 2 mm.

Note that, when the cylindrical body 82 is not present, the elastic member 84 is fixed to or integrally molded with the flange portion 76.

The enlarged diameter portion 74 continuously extends toward the upper side of the partition member 72, and increases in diameter toward the upper side. In the present embodiment, the enlarged diameter portion 74 continuously extends toward the upper side of the cylindrical body 82 of the partition member 72. The enlarged diameter portion 74 guides the supply device 46 and/or the catalyst slurry (coating liquid) S to the inside (hollow portion) of the partition member 72. Any inner diameter of the enlarged diameter portion 74 is larger than an inner diameter of the partition member 72, including an inner diameter at an upper end, an inner diameter at a lower end, and an inner diameter between the upper end and the lower end of the enlarged diameter portion 74. The inner diameter at the lower end of the enlarged diameter portion 74 may be equal to the inner diameter of the partition member 72.

The flange portion 76 is provided on the partition member 72 and protrudes outward from a position between an upper end and a lower end of an outer peripheral surface of the partition member 72. In the present embodiment, the flange portion 76 preferably protrudes in the horizontal direction from the outer peripheral surface of the cylindrical body 82. In the present embodiment, the lower surface of the flange portion 76 is placed on the annular body 36 fixed to the first outer cylinder extension portion 33a on the upper side of the outer cylinder 32. Thus, the flange portion 76 is disposed opposite to the end portion 32a of the first outer cylinder extension portion 33a.

Note that the flange portion 76 is preferably formed in an annular shape, but may not have a continuous annular shape.

Portions of the guide member 44 other than the elastic member 84 may be integrally formed, or may be formed by combining a plurality of members. In the present embodiment, an example will be described in which a portion of the guide member 44 excluding the elastic member 84 is schematically formed by two upper and lower members. In the present embodiment, the guide member 44 includes a first member 110 and a second member 120.

The first member 110 is formed as an upper member of the guide member 44. The first member 110 includes a first cylindrical body portion 111 that forms a part of the cylindrical body 82, the enlarged diameter portion 74 that is formed continuously upward from one end (upper end) of the first cylindrical body portion 111 and has a cylindrical shape having an inner diameter that increases as it separates upward from the first cylindrical body portion 111, and a first flange portion 112 that protrudes outward from another end (lower end) of the first cylindrical body portion 111. The first member 110 is formed by resin, for example, polyethylene, but may be formed by metal such as a stainless steel material or an aluminum alloy material.

The second member 120 is formed as a lower member of the guide member 44. The second member 120 includes a second cylindrical body portion 121 that forms the remaining part of the cylindrical body 82 and a second flange portion 122 that protrudes outward from one end (upper end) of the cylindrical body 82. The second member 120 is formed by resin, for example, polyethylene, but may be formed by metal such as a stainless steel material or an aluminum alloy material.

An inner diameter of the second cylindrical body portion 121 is preferably the same as an inner diameter of the first cylindrical body portion 111, and inner peripheral surfaces of the first cylindrical body portion 111 and the second cylindrical body portion 121 are preferably flush with each other. Note that an outer diameter of the second cylindrical body portion 121 is preferably smaller than an outer diameter of the first cylindrical body portion 111, and the second cylindrical body portion 121 is thinner than the first cylindrical body portion 111. Then, the outer diameter of the second cylindrical body portion 121 is smaller than an inner diameter of the outer cylinder 32, and the gap G having an appropriate size is formed between an outer peripheral surface of the second cylindrical body portion 121 and the inner peripheral surface of the first outer cylinder extension portion 33a of the outer cylinder 32.

The direction in which the second flange portion 122 protrudes coincides with the direction in which the first flange portion 112 protrudes. The first flange portion 112 is fixed as an upper side and the second flange portion 122 is fixed as a lower side, and the flange portion 76 is formed. Although not illustrated, the first flange portion 112 and the second flange portion 122 are preferably watertightly fixed by, for example, a bolt and a nut in a state where, for example, an O-ring or the like is disposed between the first flange portion 112 and the second flange portion 122. For example, the flange portion 76 is supported by the moving device 50b, and the guide member 44 moves up and down within a predetermined range along the Z-axis direction.

Note that, when the lower surface of the flange portion 76 (the lower surface of the second flange portion 122) abuts on an upper surface of the annular body 36, the lower end 84a of the elastic member 84 is disposed in a vicinity of a position about 0 mm to 2 mm above the upper end surface 34a of the honeycomb substrate 34.

The supply device 46 is preferably movable up and down within a predetermined range along the Z-axis direction independently of the guide member 44. The supply device 46 includes a nozzle portion 46a having a size that fits into the enlarged diameter portion 74 of the guide member 44. The catalyst slurry S is supplied to the inside of the cylindrical body 82 and the elastic member 84 through the nozzle portion 46a. The supply device 46 is supported by the moving device 50c, and the supply device 46 moves up and down within a predetermined range.

The suction device 48 is preferably movable up and down within a predetermined range along the Z-axis direction independently of the guide member 44 and the supply device 46. The suction port 48a at the upper end of the suction device 48 abuts on the second fitting portion 64. The suction device 48 is supported by the moving device 50d, and the suction device 48 moves up and down within a predetermined range.

Next, a catalyst coating method (manufacturing method) for coating the honeycomb substrate of the exhaust gas-purifying catalyst 20 with the catalyst slurry S using the catalyst coating apparatus 10 will be described.

When the above catalyst coating apparatus 10 is used, for example, the catalyst can be coated on the honeycomb substrate 34 of the exhaust gas-purifying catalyst 20 by the following method.

The initial position (first position) of the catalyst coating apparatus 10 is, for example, the following position.

The lower end 84a of the elastic member 84 of the guide member 44 is positioned above the upper end portion 32a of the first outer cylinder extension portion 33a of the exhaust gas-purifying catalyst 20. Further, the lower end of the nozzle portion 46a of the supply device 46 is positioned above the upper end of the enlarged diameter portion 74 of the guide member 44. Furthermore, the lower end of the base 42 is positioned above the suction port 48a at the upper end of the suction device 48.

When the catalyst slurry S is coated on the honeycomb substrate 34 by the catalyst coating apparatus 10, the base 42, the guide member 44, the supply device 46, and the suction device 48 of the catalyst coating apparatus 10 move to the following positions (second positions).

The lower end portion 32b of the second outer cylinder extension portion 33b of the exhaust gas-purifying catalyst 20 is supported by the first fitting portion 62 of the base 42. At this time, the central axis of the opening 60 of the base 42 coincides with the central axis of the outer cylinder 32.

The controller 52 operates the moving device 50a to move the base 42 in this state to a predetermined coating position where the catalyst slurry S is coated on the honeycomb substrate 34, and then stops the base 42. At this time, the central axis of the opening 60 of the base 42 coincides with the central axes of the guide member 44, the supply device 46, and the suction device 48. That is, the axial direction of the central axis of the outer cylinder 32 coincides with the vertical direction, the guide member 44 is disposed on the upper side of the first outer cylinder extension portion 33a, and the supply device 46 is disposed in the vicinity of the enlarged diameter portion 74 of the guide member 44 or on the upper side thereof. Further, the suction device 48 is disposed below the base 42 and the second outer cylinder extension portion 33b.

Note that, after the central axis of the opening 60 of the base 42 is arranged so as to coincide with the central axes of the guide member 44, the supply device 46, and the suction device 48, the lower end portion 32b of the second outer cylinder extension portion 33b of the exhaust gas-purifying catalyst 20 may be supported by the first fitting portion 62 of the base 42.

Then, the controller 52 operates the moving device 50b to lower the guide member 44, and disposes the elastic member 84 and the cylindrical body 82 inside the first outer cylinder extension portion 33a. The guide member 44 is placed so that the lower surface of the flange portion 76 (the lower surface of the second flange portion 122) is in contact with the upper surface of the annular body 36. At this time, the lower end 84a of the elastic member 84 is slightly separated upward from the upper end surface 34a of the honeycomb substrate 34. Specifically, the lower end 84a of the elastic member 84 is about 0 mm to 2 mm with respect to the upper end surface 34a of the honeycomb substrate 34. Further, an outer peripheral surface of the elastic member 84 is separated from the inner peripheral surface of the first outer cylinder extension portion 33a.

The controller 52 operates the moving device 50d to raise the suction port 48a of the suction device 48, and fits the suction port 48a to the second fitting portion 64 of the base 42. Note that the timing at which the controller 52 lowers the guide member 44 by the moving device 50b and moves the guide member toward the first outer cylinder extension portion 33a and the timing at which the suction device 48 is raised by the moving device 50d and is moved toward the base 42 may be either the first timing or the same timing.

Then, the controller 52 operates the moving device 50c to guide the nozzle portion 46a of the supply device 46 toward the hollow portion of the partition member 72 to the vicinity of the lower end of the enlarged diameter portion 74 of the guide member 44. The controller 52 controls the supply device 46 to place the catalyst slurry S from the nozzle portion 46a in the space between the upper end surface 34a of the honeycomb substrate 34 and an inner peripheral surface of the elastic member 84 and an inner peripheral surface of the cylindrical body 82. Then, after discharging a predetermined amount of the catalyst slurry S to one exhaust gas-purifying catalyst 20, the controller 52 operates the moving device 50c to raise the supply device 46 with respect to the guide member 44, and arranges the lower end of the supply device 46 above the upper end of the enlarged diameter portion 74.

The inner peripheral surface of the elastic member 84 and the inner peripheral surface of the cylindrical body 82 block the flow of the catalyst slurry S toward the outside of the elastic member 84. Therefore, the elastic member 84 suppresses the catalyst slurry S from moving toward the inner peripheral surface of the first outer cylinder extension portion 33a beyond the position of the elastic member 84.

Note that a region below a region on an inside of the inner peripheral surface of the elastic member 84 illustrated in FIG. 1 before suction is performed by the suction device 48 is referred to as a first region (central region) R1, and a region below a region outside the inner peripheral surface of the elastic member 84 is referred to as a second region (outer peripheral region) R2. The second region R2 is a region below the region between the outer peripheral surface of the elastic member 84 and the inner peripheral surface of the first outer cylinder extension portion 33a. The first region R1 is formed in a substantially cylindrical shape, and the second region R2 is formed in a substantially cylindrical shape concentric with the first region R1.

Note that, as will be described later, the first region R1 and the second region R2 change as the lower end 84a of the elastic member 84 opens outward.

In a state where the suction port 48a is in contact with the second fitting portion 64, for example, the controller 52 operates the suction device 48 to suck the honeycomb substrate 34 from below the exhaust gas-purifying catalyst 20. The suction action acts on both the first region (central region) R1 and the second region (outer peripheral region) R2. Thus, the suction port 48a of the suction device 48 is disposed at a position facing the lower end surface 34b of the honeycomb substrate 34, and can suck the catalyst slurry S.

At this time, as illustrated in FIG. 4, the catalyst slurry S on the inside of the inner peripheral surface of the elastic member 84 is sucked into the suction device 48 through a through hole in the first region R1. In addition, a space between the outer peripheral surface of the elastic member 84 and the first outer cylinder extension portion 33a is sucked and becomes a negative pressure. Thus, the pressure between the outer peripheral surface of the elastic member 84 of the partition member 72 and the inner peripheral surface of the first outer cylinder extension portion 33a becomes smaller than the pressure on the inside of the inner peripheral surface of the elastic member 84 of the partition member 72. At this time, a first pressure on the inner peripheral surface side of the elastic member 84 is relatively larger than a second pressure between the outer peripheral surface of the elastic member 84 and the first outer cylinder extension portion 33a. Thus, as illustrated in FIGS. 4 and 5, the elastic member 84 swing opens outward in a flared shape. That is, the lower end 84a of the elastic member 84 elastically deforms in a flare shape and moves toward the inner peripheral surface of the first outer cylinder extension portion 33a. Therefore, the first region R1 expands outward along a radial direction of the outer cylinder 32, and the second region R2 contracts from the inside to the outside along the radial direction of the outer cylinder 32. Before the lower end 84a of the elastic member 84 moves from the position illustrated in FIGS. 1 and 2 to the position illustrated in FIGS. 4 and 5 by elastic deformation, the first region R1 continues to expand and the second region R2 continues to contract. As described above, as the elastic member 84 serving as a stopper for the catalyst slurry S elastically deforms from the state illustrated in FIGS. 1 and 2 to the state illustrated in FIGS. 4 and 5, the catalyst slurry S follows the inner peripheral surface of the elastic member 84 and moves on the upper end surface 34a of the honeycomb substrate 34 toward the inner peripheral surface of the first outer cylinder extension portion 33a. The lower end 84a of the elastic member 84 comes close to the inner peripheral surface of the first outer cylinder extension portion 33a by elastic deformation. At this time, the catalyst slurry S moving toward the inner peripheral surface of the first outer cylinder extension portion 33a by the suction action of the suction device 48 flows from the upper side to the lower side through the inner peripheral surface of the outer cylinder 32 and a cell in the vicinity of the outer peripheral surface of the honeycomb substrate 34 in the vicinity of the inner peripheral surface of the outer cylinder 32.

Here, when the catalyst slurry S supplied from the supply device 46 is of an appropriate amount and the catalyst slurry S has an appropriate viscosity, the catalyst slurry S on the inside of the inner peripheral surface of the elastic member 84 is sucked into the suction device 48 through the through hole in the second region R2. Thus, a part of the catalyst slurry S is also coated on the outermost circumference of the honeycomb substrate 34.

Note that, when the amount of the catalyst slurry S supplied from the supply device 46 is small or the viscosity of the catalyst slurry S is too low, the expansion amount of the first region R1 is small, and the catalyst slurry S is not coated on the outermost circumference of the honeycomb substrate 34. Thus, the amount of the catalyst slurry S, the viscosity of the catalyst slurry S, and the like are appropriately set according to the relationship between the first region R1 and the second region R2 or the like in the initial state.

The catalyst slurry S may be recovered by the suction device 48 and reused for coating another exhaust gas-purifying catalyst 20.

Therefore, as illustrated in FIGS. 4 and 5, the catalyst coating apparatus 10 can also coat the outermost circumference of the honeycomb substrate 34 of the exhaust gas-purifying catalyst 20 and the vicinity thereof with the catalyst slurry S. At this time, it is possible to prevent the catalyst slurry S from being unintentionally coated on the inner peripheral surface of the first outer cylinder extension portion 33a.

Then, the exhaust gas-purifying catalyst 20 is fired after drying the catalyst slurry S coated on all the cells.

As described above, when the axial direction of the outer cylinder 32 is arranged in the vertical direction, the guide member (tool) 44 of the catalyst coating apparatus 10 according to the present embodiment causes the outer peripheral surface of the elastic member 84 to face and be adjacent to the inner peripheral surface of the first outer cylinder extension portion 33a protruding upward with respect to the upper end surface 34a of the honeycomb substrate 34. Then, when the catalyst slurry S coated on the honeycomb substrate 34 is supplied to the upper end surface 34a of the honeycomb substrate 34 and the inside of the inner peripheral surface of the elastic member 84, the lower end 84a of the elastic member 84 is adjacent to the upper end surface 34a of the honeycomb substrate 34 so as to suppress contact of the catalyst slurry S with the inner peripheral surface of the first outer cylinder extension portion 33a. When the catalyst slurry S is sucked from the lower side of the honeycomb substrate 34 in a state where the catalyst slurry S is supplied to the upper end surface 34a of the honeycomb substrate 34 and the inside of the inner peripheral surface of the elastic member 84, the catalyst slurry S is coated on the honeycomb substrate 34. At this time, the lower end 84a of the elastic member 84 is elastically deformed in a flare shape so as to approach the inner peripheral surface of the first outer cylinder extension portion 33a. Thus, according to the present embodiment, there are provided the guide member (tool) 44 for the catalyst coating apparatus 10 and the catalyst coating apparatus 10 capable of protecting the inner peripheral surface of the first outer cylinder extension portion 33a with the elastic member 84 and making it difficult to form the coating layer of the catalyst slurry S on the inner peripheral surface of the first outer cylinder extension portion 33a.

According to the catalyst coating apparatus 10 of the present embodiment, the catalyst slurry S can be favorably coated on the region from the central axis and the vicinity thereof of the honeycomb substrate 34 to the outer peripheral surface by adjustments (including the adjustment of the length of the elastic member 84) of the positional relationship between the partition member 72 of the guide member 44 and the first outer cylinder extension portion 33a of the outer cylinder 32, the positional relationship between the lower end 84a of the elastic member 84 and the upper end surface 34a of the honeycomb substrate 34, and the flexibility of the elastic member 84, the adjustments of the amount of the catalyst slurry S supplied to the upper end surface 34a of the honeycomb substrate 34 before the suction action of the suction device 48 is operated, and the viscosity of the catalyst slurry S, and the like. At this time, it is possible to prevent the catalyst slurry S from being coated on the inner peripheral surface of the first outer cylinder extension portion 33a.

At this time, it is not necessary to protect each inner peripheral surface of the first outer cylinder extension portion 33a by masking or to protect the inner peripheral surface of the first outer cylinder extension portion 33a using a balloon or the like. Alternatively, the region of the masking on the inner peripheral surface of the first outer cylinder extension portion 33a can be reduced. Thus, the catalyst coating apparatus 10 can protect the inner peripheral surface of the first outer cylinder extension portion 33a from adhesion of the catalyst slurry S simply by moving the guide member 44 up and down along the Z-axis direction and placing the lower surface of the flange portion 76 of the guide member 44 on the annular body 36 attached to the upper end portion 32a of the first outer cylinder extension portion 33a of the exhaust gas-purifying catalyst 20.

As described above, according to the present embodiment, it is possible to provide the guide member (tool) 44 for the catalyst coating apparatus 10 and the catalyst coating apparatus 10 capable of making it difficult to form the coating layer of the catalyst slurry S on the inner peripheral surface of the first outer cylinder extension portion 33a.

### (Second Embodiment)

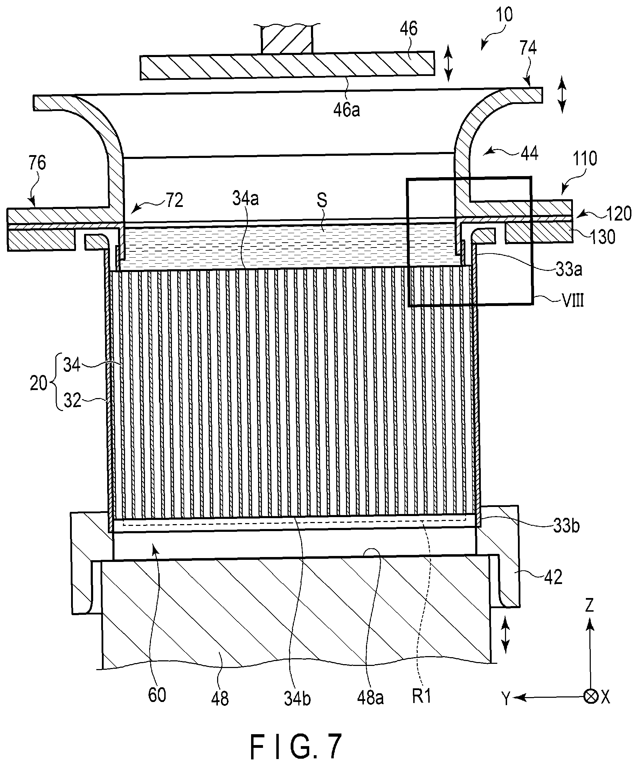

Next, a catalyst coating apparatus 10 according to a second embodiment will be described with reference to FIGS. 7 to 10. The present embodiment is a modification of the first embodiment, and the same members or members having the same functions as the members described in the first embodiment are denoted by the same reference numerals as much as possible, and a detailed description thereof will be omitted.

In the present embodiment, an example will be described in which a flow path (air intake port) F that communicates with the outside of an exhaust gas-purifying catalyst 20 and takes in air from the outside of the exhaust gas-purifying catalyst 20 between an outer peripheral surface of an elastic member 84 and an inner peripheral surface of a first outer cylinder extension portion 33a is formed between a flange portion 76 of a guide member 44 and an annular body 36 of the exhaust gas-purifying catalyst 20.

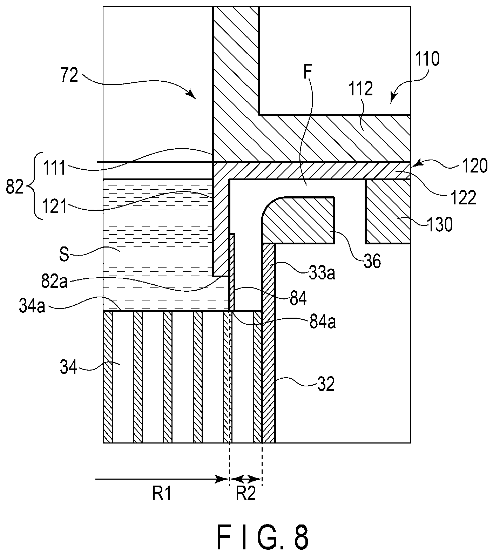

As illustrated in FIGS. 7 and 8, an outer diameter and a wall thickness along a Z-axis direction of the annular body 36 attached to an upper end portion 32a of the first outer cylinder extension portion 33a of the exhaust gas-purifying catalyst 20 are formed to be smaller than an outer diameter and a wall thickness of the annular body 36 described in the first embodiment.

As illustrated in FIGS. 7 to 10, in the present embodiment, the guide member 44 includes a third member 130 in addition to a first member 110 and a second member 120. The third member 130 is formed as a disk body formed on a lower surface of a second flange portion 122. An inner diameter of the third member 130 is larger than an outer diameter of the annular body 36.

Then, the guide member 44 is disposed in the same positional relationship as the positional relationship described in the first embodiment with respect to the exhaust gas-purifying catalyst 20. That is, a lower end 84a of the elastic member 84 is disposed at a position separated upward from an upper end surface 34a of a honeycomb substrate 34 by 0 mm to 2 mm.

Thus, an air flow path F is formed between an outer peripheral surface of the annular body 36 and an inner peripheral surface of the third member 130, and between an upper surface of the annular body 36 and the lower surface of the second flange portion 122 to communicate between an outer peripheral surface of the cylindrical body 82, the outer peripheral surface of the elastic member 84, and the inner peripheral surface of the first outer cylinder extension portion 33a, and the outside of the exhaust gas-purifying catalyst 20. The flow path F is annularly formed around the axis of the central axis of the outer cylinder 32.

Next, a catalyst coating method (manufacturing method) for coating the exhaust gas-purifying catalyst 20 with a catalyst slurry S using the catalyst coating apparatus 10 will be described. Here, the description of the same parts as those of the catalyst coating method described in the first embodiment will be appropriately omitted.

As described in the first embodiment, the elastic member 84 of the guide member 44 is disposed in the same positional relationship as the positional relationship described in the first embodiment with respect to the exhaust gas-purifying catalyst 20. That is, a lower end 84a of the elastic member 84 is disposed at a position separated upward from an upper end surface 34a of a honeycomb substrate 34 by 0 mm to 2 mm. At this time, the flow path F is formed between the outer peripheral surface of the elastic member 84 and the outer peripheral surface of the cylindrical body 82 and the inner peripheral surface of the first outer cylinder extension portion 33a, between the upper surface of the annular body 36 and the lower surface of the second flange portion 122, and between the outer peripheral surface of the annular body 36 and the inner peripheral surface of the third member 130.

In this state, the catalyst slurry S is supplied to the inside of the inner peripheral surfaces of the cylindrical body 82 and the elastic member 84. Further, a suction port 48a of a suction device 48 is fitted to a second fitting portion 64.

Note that, before suction is performed by the suction device 48, a region below a region on the inside of the inner peripheral surface of the elastic member 84 illustrated in FIGS. 7 and 8 is referred to as a first region (central region) R1, and a region below a region outside the inner peripheral surface of the elastic member 84 is referred to as a second region (outer peripheral region) R2. The second region R2 is a region below the region between the outer peripheral surface of the elastic member 84 and the inner peripheral surface of the first outer cylinder extension portion 33a. The first region R1 is formed in a substantially columnar shape, and the second region R2 is formed in a substantially hollow cylindrical shape.

In this state, a controller 52 operates the suction device 48 to suck the honeycomb substrate 34 from below the exhaust gas-purifying catalyst 20. The suction action acts on both the first region (central region) R1 and the second region (outer peripheral region) R2. At this time, the catalyst slurry S on the inside of the inner peripheral surface of the elastic member 84 is sucked into the suction device 48 through a through hole in the first region R1. Further, a space between the outer peripheral surface of the elastic member 84 and the first outer cylinder extension portion 33a is sucked through the through hole in the first region R1, and a negative pressure is generated. Thus, the pressure between the outer peripheral surface of the elastic member 84 of a partition member 72 and the inner peripheral surface of the first outer cylinder extension portion 33a becomes smaller than the pressure on the inside of the inner peripheral surface of the elastic member 84 of the partition member 72. At this time, a first pressure on the inner peripheral surface side of the elastic member 84 is relatively larger than a second pressure between the outer peripheral surface of the elastic member 84 and the first outer cylinder extension portion 33a. Thus, the elastic member 84 swing opens outward in a flared shape, and the catalyst slurry S moves toward the inner peripheral surface of the first outer cylinder extension portion 33a. Therefore, the catalyst slurry S on the inside of the inner peripheral surface of the elastic member 84 is sucked into the suction device 48 through the through hole of the second region R2. Thus, a part of the catalyst slurry S is also coated on the outermost circumference of the honeycomb substrate 34.

In the present embodiment, the above-described flow path F is formed. When the space between the outer peripheral surface of the elastic member 84 and the first outer cylinder extension portion 33a is sucked and becomes a negative pressure, outside air directed in a direction of pushing back the lower end 84a of the elastic member 84 toward the upper end surface 34a of the honeycomb substrate 34 is introduced between the outer peripheral surface of the elastic member 84 and the first outer cylinder extension portion 33a through the flow path F. This outside air causes an action of suppressing the catalyst slurry S from unintentionally adhering to the first outer cylinder extension portion 33a.

Note that the distance between the lower end of the elastic member 84 and the inner peripheral surface of the first outer cylinder extension portion 33a is preferably set to be within 2 mm.

Thus, as compared with the catalyst coating apparatus 10 having the structure described in the first embodiment, the catalyst coating apparatus 10 according to the present embodiment can further prevent the catalyst slurry S from adhering to the inner peripheral surface of the first outer cylinder extension portion 33a.

When another end surface (lower end surface) 34b of the honeycomb substrate 34 is sucked by the suction device 48, a difference in the wind velocity occurs between the inside along the inner peripheral surfaces of the cylindrical body 82 and the elastic member 84 and the outside along the outer peripheral surfaces of the cylindrical body 82 and the elastic member 84 (indicated by reference sign β). An inside α along the inner peripheral surfaces of the cylindrical body 82 and the elastic member 84 has a larger wind speed than an outer side β along the outer peripheral surfaces of the cylindrical body 82 and the elastic member 84. Thus, the lower end 84a of the elastic member 84 expands toward the inner peripheral surface of the first outer cylinder extension portion 33a. Thus, the catalyst slurry S is coated on all the cells (partition walls) while diffusing to the outermost peripheral portion of the honeycomb substrate 34.

When the operation of the suction device 48 is stopped and the suction is stopped, the position of the lower end 84a of the elastic member 84 is returned to the position illustrated in FIGS. 7 and 8 by the elastic force of the elastic deformation 84.

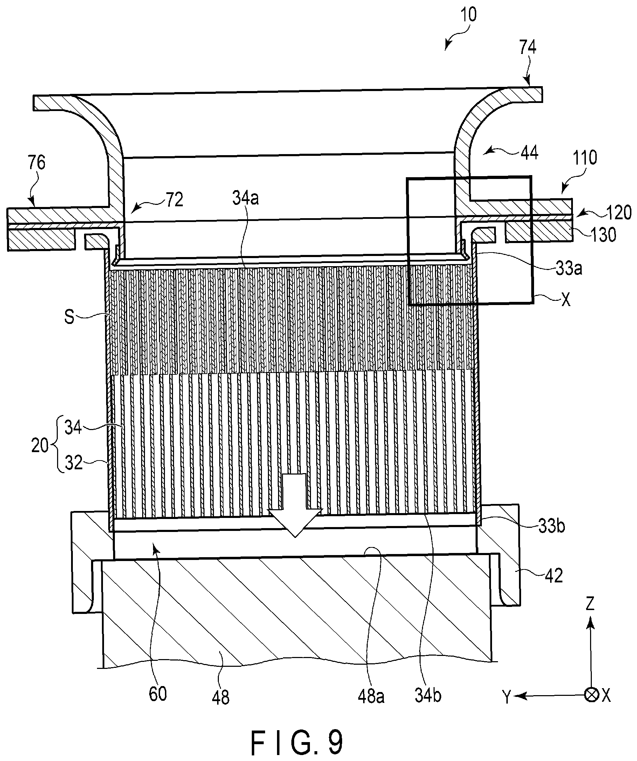

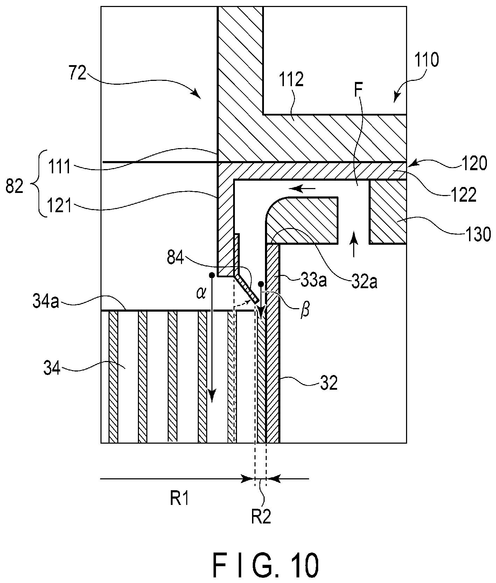

Therefore, as illustrated in FIGS. 9 and 10, the outermost circumference of the honeycomb substrate 34 of the exhaust gas-purifying catalyst 20 and the vicinity thereof are also coated with the catalyst slurry S. Then, the exhaust gas-purifying catalyst 20 is fired after drying the catalyst slurry S coated on all the cells.

In the present embodiment, a flow path (air intake port) F for taking in air between the outer peripheral surface of the elastic member 84 and the inner peripheral surface of the first outer cylinder extension portion 33a by suction of the lower end surface 34b of the honeycomb substrate 34 in a state where the catalyst slurry S is supplied is provided between the flange portion 76 and the end portion 32a of the first outer cylinder extension portion 33a. Thus, the catalyst slurry S to be attached to the inner peripheral surface of the first outer cylinder extension portion 33a does not adhere or temporarily adheres by the air along the flow path F flowing when suction is performed, and then moves toward the honeycomb substrate 34 by the flow of air. Therefore, according to the present embodiment, it is possible to provide the guide member (tool) 44 for the catalyst coating apparatus 10 and the catalyst coating apparatus 10 capable of protecting the inner peripheral surface of the first outer cylinder extension portion 33a with the elastic member 84 and making it difficult to form the coating layer of the catalyst slurry S on the inner peripheral surface of the first outer cylinder extension portion 33a.

The flow path (air intake port) F does not penetrate the flange portion 76. Thus, when air is taken in from the outside of the guide member 44, dust or the like from the outside of the enlarged diameter portion 74 of the guide member 44 can be suppressed from being taken into the flow path F.

The present invention is not limited to the foregoing embodiments. For practical implementation, various modifications may be adopted without departing from the gist of the invention. Various embodiments may be discretionarily combined for implementation, and such combinations will produce combined effects. Moreover, the embodiments involve various inventive aspects, and appropriate combinations of the disclosed features will permit various inventions to be derived. For example, if omission of several features from the entire constitution or structure disclosed for the embodiments can realize the intended object and provide the effects, the constitution or structure after such omission may be derived as an invention.

## Claims

1. A tool for a catalyst coating apparatus to a metal honeycomb substrate of an exhaust gas-purifying catalyst device, the catalyst coating apparatus configured to coat the honeycomb substrate with a catalyst slurry containing a catalytic metal,
the tool is inserted into a metal outer cylinder having an axial length longer than an axial length of the honeycomb substrate which is supported by the outer cylinder in a state where an axial direction of the honeycomb substrate is arranged in a vertical direction,
the tool comprising a hollow cylindrical partition member having flexibility,
an outer peripheral surface of the partition member facing an inner peripheral surface of an outer cylinder extension portion of the outer cylinder protruding upward with respect to an upper end surface of the honeycomb substrate, wherein
when the catalyst slurry is supplied to the upper end surface of the honeycomb substrate and an inside of an inner peripheral surface of the partition member, a lower end of the partition member is disposed in a vicinity of an upper end surface of the honeycomb substrate to prevent the catalyst slurry from contacting the inner peripheral surface of the outer cylinder extension portion.

2. The tool according to claim 1, wherein:
in a state where the catalyst slurry is supplied, the lower end of the partition member is elastically deformed in a flare shape so as to approach the inner peripheral surface of the outer cylinder extension portion by suction from a lower end surface of the honeycomb substrate.

3. The tool according to claim 1 or 2, wherein:
the partition member includes a flange portion on the outer peripheral surface,
the flange portion being disposed to face an end surface of the outer cylinder extension portion, and
an air intake port provided between the flange portion and the end surface of the outer cylinder extension portion,
the air intake port taking in air between the outer peripheral surface of the partition member and the inner peripheral surface of the outer cylinder extension portion by suction of a lower end surface of the honeycomb substrate in a state where the catalyst slurry is supplied.

4. A catalyst coating apparatus of an exhaust gas-purifying catalyst device on a honeycomb substrate, the catalyst coating apparatus comprising:
a base that supports a lower end of the outer cylinder when an axial direction of the outer cylinder of the exhaust gas-purifying catalyst device is arranged in a vertical direction;
the tool according to any one of claims 1 to 3, the tool being attached to the outer cylinder extension portion of the outer cylinder;
a catalyst slurry supply device that is configured to supply the catalyst slurry to an upper end surface of the honeycomb substrate and an inside of an inner peripheral surface of the partition member; and
a suction device that is configured to coat the honeycomb substrate with the catalyst slurry on the upper end surface of the honeycomb substrate to the honeycomb substrate by sucking the lower end surface of the honeycomb substrate through the base.

5. A catalyst coating method to a metal honeycomb substrate of an exhaust gas-purifying catalyst device, the catalyst coating method comprising:
disposing an outer peripheral surface of a hollow cylindrical partition member having flexibility facing an inner peripheral surface of a first outer cylinder extension portion of a metal outer cylinder protruding upward with respect to an upper end surface of the honeycomb substrate, the partition member being inserted into the outer cylinder having an axial length longer than an axial length of the honeycomb substrate which is supported by the outer cylinder in a state where an axial direction of the honeycomb substrate is arranged in a vertical direction, and the vertical direction of the partition member coincides with an axial direction of the outer cylinder;
supplying a catalyst slurry to the upper end surface of the honeycomb substrate and an inside of the inner peripheral surface of the partition member; and
sucking the catalyst slurry from a lower side of a lower end surface of the honeycomb substrate to cause a pressure between the outer peripheral surface of the partition member and the inner peripheral surface of the first outer cylinder extension portion to be smaller than a pressure inside the inner peripheral surface of the partition member, to cause a lower end of the partition member to be elastically deformed in a flare shape so as to approach the inner peripheral surface of the first outer cylinder extension portion.

6. The catalyst coating method according to claim 5, wherein:
the disposing the partition member with respect to the upper end surface of the honeycomb substrate comprises:
disposing the partition member so that a space between the upper end surface of the honeycomb substrate and the lower end of the partition member is 0 mm to 2 mm; and
making the catalyst slurry have viscosity that suppresses the catalyst slurry from flowing from the space between the upper end surface of the honeycomb substrate and the lower end of the partition member toward the inner peripheral surface of the first outer cylinder extension portion.
